# EUROPEAN PATENT APPLICATION

(11) **EP 3 919 385 A1**
(43) Date of publication of application: **08.12.2021**
(21) Application number: 21178074.7
(22) Date of filing: 07.06.2021
(51) Int. Cl.: B64D 11/00

(54) **WIRELESS OVERHEAD BINS**

(30) Priority: 05.06.2020 US 202063035119 P; 04.06.2021 US 202117339288
(71) Applicant: B/E Aerospace, Inc., Winston-Salem, NC 27105 (US)
(72) Inventor: Abu-Saymeh, Mudar S., Olathe (US); Schmalz, Brian C., Leawood, 66224 (US)
(74) Representative: Dehns

(57) **Abstract**

A system comprises an overhead bin (102) including a door (104) configured to open and close an opening (106) of the overhead bin for access to and securing of an interior space of the overhead bin. A latch mechanism (110) is operatively connecting the opening of the overhead bin to the door of the overhead bin to secure the door to the opening in a closed position, and to release the door from the opening for access to the interior space. A controller (114) is operatively connected to the latch mechanism, the controller having a wireless receiver (116) and machine readable instructions configured to cause the controller to release the latch mechanism for releasing the door from the opening upon receipt of a wireless command to open the overhead bin.

## Description

### CROSS-REFERENCE TO RELATED APPLICATIONS

This application claims priority to and the benefit of U.S. Provisional Patent Application No. 63/035,119, filed June 5, 2020.

### BACKGROUND

### 1. Field

The present disclosure relates generally to aircraft interiors and more specifically to opening and closing components such as overhead bins.

### 2. Description of Related Art

The COVID-19 outbreak has raised the demands of disinfection, social distancing, and other measures to reduce the spread of antigens in aircraft cabins and the objects within. There is an ongoing need for improved systems and methods to reduce the spread of antigens aboard aircraft providing service to the crew, ground personnel, and passengers. This disclosure provides a solution for this need.

### SUMMARY

A system comprises an overhead bin including a door configured to open and close an opening of the overhead bin for access to and securing of an interior space of the overhead bin. A latch mechanism is operatively connecting the opening of the overhead bin to the door of the overhead bin to secure the door to the opening in a closed position, and to release the door from the opening for access to the interior space. A controller is operatively connected to the latch mechanism, the controller having a wireless receiver and machine readable instructions configured to cause the controller to release the latch mechanism for releasing the door from the opening upon receipt of a wireless command to open the overhead bin.

In embodiments, the overhead bin can be one of a plurality of similar overhead bins, each having a respective door, opening, latch mechanism, and controller. A wireless device can be configured to issue a command to each of the controllers to open all of the overhead bins. A server can wirelessly connect between the wireless device and the wireless receivers of the controllers for controlling the overhead bins from the wireless device.

In embodiments, the wireless device can be a flight crew device and wherein the server is configured to connect a plurality of wireless passenger devices. The wireless passenger devices, the server, and the controllers can be configured for the server to accept commands from each wireless passenger device to open only one or more overhead bins for which a given passenger device is authorized.

In embodiments, the server and the overhead bins can be located in an aircraft interior, where each controller and latch mechanism can be electrically connected to aircraft power.

In embodiments, at least one of the wireless device, the overhead bins, and/or the server can include machine readable instructions configured to prevent opening of the overhead bins in certain phases of a flight. In embodiments, the wireless device, the server, and controllers can be configured to allow for individual control of opening of each overhead bin so that a user of the wireless device can selectively open one or more individual overhead bins or all overhead bins.

In certain embodiments, the wireless device can include a graphical user interface (GUI), a location sensor, a machine readable instructions configured to cause the wireless device to detect location of the wireless device, display indicators of nearby overhead bins on the GUI, and receive user input indicative of which overhead bin to open of the nearby overhead bins.

In embodiments, the door can biased to open relative to the opening upon release of the latch mechanism. In certain embodiments, the latch mechanism can include an actuator connecting between the door and the opening to actively drive the door closed and open based on command signals from the controller.

In embodiments, a method includes, after landing an aircraft, wirelessly opening a plurality of overhead bins upon receiving a command from a wireless device. The method can include manually closing the overhead bins after passengers have been seated. In embodiments, the method can include closing the overhead bins by wirelessly commanding a respective door actuator in each overhead bin to close after passengers have been seated.

In certain embodiments, the wireless device can be a flight crew wireless device and the method can further include opening an individual bin without opening other overhead bins upon receiving a command from a wireless passenger device. In embodiments, the method can include preventing opening of the overhead bins in certain phases of a flight. In embodiments, the method can include opening an individual overhead bin without opening any other overhead bins upon receiving a command from the wireless device.

In embodiments, the wireless device can include a graphical user interface (GUI) and a location sensor, and the method can further include detecting location of the wireless device, displaying indicators of nearby overhead bins on the GUI, receiving user input indicative of which overhead bin to open of the nearby overhead bins, and opening only one or more overhead bins indicated by the user input without opening any other overhead bins.

In embodiments, opening can include unlatching a door of each overhead bin, and allowing each door to open under bias constantly applied to the door. Opening can include driving each door open with a respective actuator. The method can include closing each door with the respective actuator.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic perspective view of an embodiment of a wireless overhead bin system constructed in accordance with the present disclosure, showing interaction between components of the wireless system;
Fig. 2 is an enlarged schematic view of an overhead bin in the system of Fig. 1.

### DETAILED DESCRIPTION

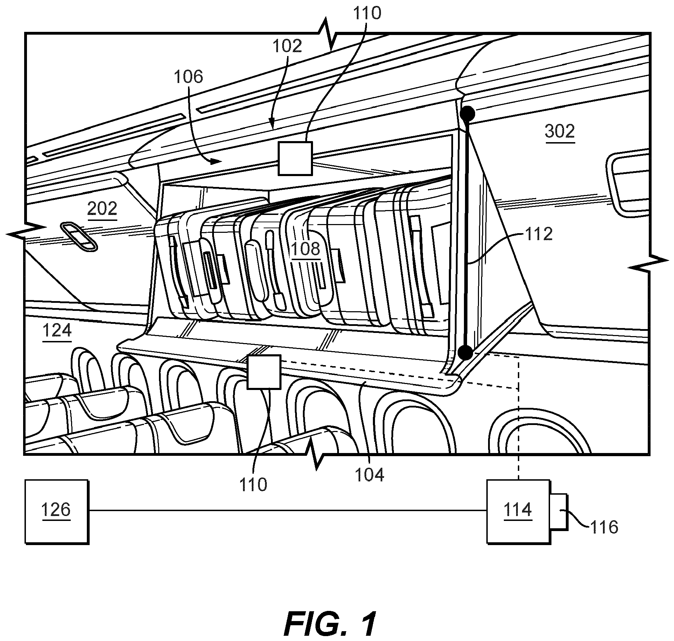

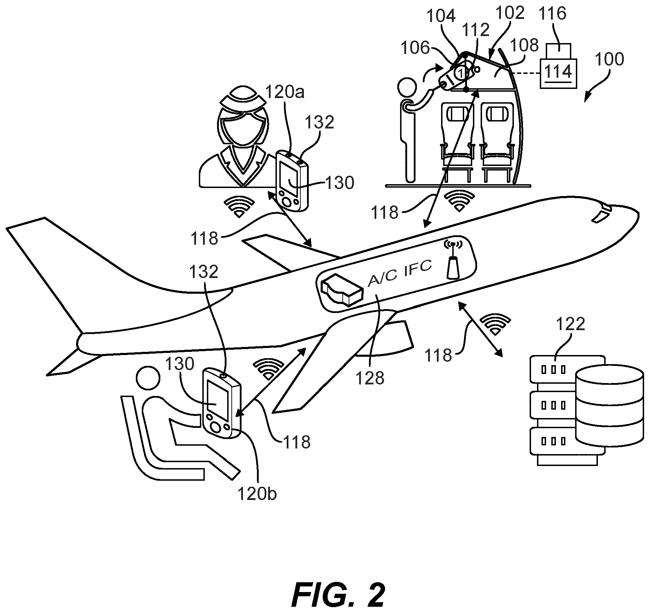

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2 as will be described. The systems and methods described herein can be used to wirelessly operate overhead bins in commercial passenger vehicles.

A system 100 comprises an overhead bin 102 including a door 104 configured to open and close an opening 106 of the overhead bin 102 for access to and securing of an interior space 108 of the overhead bin. A latch mechanism 110 operatively connects the opening 106 of the overhead bin 102 to the door 104 to secure the door 104 to the opening 106 in a closed position, and to release the door 104 from the opening 106 for access to the interior space 108.

In certain embodiments, the door 104 can biased to open relative to the opening 106 upon release of the latch mechanism 110. For example, the overhead bin 102 can include at least one biasing member such as a biasing spring, or the bias can be achieved by orienting the overhead bin 102 so that opening is assisted by the force of gravity. In certain embodiments, the latch mechanism 110 can include an actuator 112 connecting between the door 104 and the opening 106 to actively drive the door 104 closed and open.

A controller 114 is operatively connected to the latch mechanism 110, the controller 114 having a wireless receiver 116 and machine readable instructions configured to cause the controller 114 to release the latch mechanism 110 for releasing the door 104 from the opening 106 upon receipt of a wireless command 118 to open the overhead bin 102 to allow the overhead bin 102 to open semi touch free, or completely touch free.

In embodiments, the overhead bin can be one of a plurality of similar overhead bins (e.g. neighboring bins 202, 302), each having a respective door, opening, latch mechanism, and controller. A wireless device 120 can be configured to issue the command 118 to each of the controllers 114 to open all of the overhead bins 102. A server 122 can wirelessly connect between the wireless device 120 and the wireless receivers 116 of the controllers 114 for controlling the overhead bins 102 from the wireless device 120.

In embodiments, the server 122 and the overhead bins 102 can be located in an aircraft interior 124, where each controller 114 and latch mechanism 110 can be electrically connected to aircraft power 126. It is also contemplated the server 122 can be part of an inflight entertainment system (IFE) 128 that includes software to provide additional means for wirelessly operating the overhead bin 102.

In embodiments, the wireless device 120 can be a flight crew device 120a and the server is configured to connect a plurality of wireless passenger devices 120b. The wireless passenger devices 120b, the server 122, and the controllers 114 can be configured for the server to accept commands 118 from each wireless passenger device 120b to open only one or more overhead bins for which a given passenger device is authorized. For example, if a passenger holds a coach ticket, their device 120b would not be authorized to operate the overhead bins in first class. Additionally, a wireless passenger device 102b may only be authorized to open those overhead bins 102 directly above the row in which the passenger is seated, and may include the directly adjacent bins 202, 303.

In embodiments, at least one of the wireless device 120, the overhead bins 102, and/or the server 122 can include machine readable instructions configured to prevent opening of the overhead bins in certain phases of a flight, such as taxiing, takeoff, landing, turbulence, emergency maneuvering, and any other phase of a flight where it is inadvisable to have open overhead bins 102.

In embodiments, the wireless device 120, the server 122, and controllers 114 can be configured to allow for individual control of opening of each overhead bin, for example so that a user of the wireless device 120 can selectively open either each respective overhead bin individually or all overhead bins 102 simultaneously.

In certain embodiments, the wireless device 120 can include a graphical user interface (GUI) 130, a location sensor 132, and machine readable instructions configured to cause the wireless device 120 to detect location of the wireless device 120, display indicators of nearby overhead bins on the GUI 130, and receive user input indicative of which overhead bin to open of the nearby overhead bins 102.

In embodiments, a method comprises, after landing an aircraft, wirelessly opening a plurality of overhead bins upon receiving a command from a wireless device 120. For example, when the aircraft has landed and ready for deplaning, flight crew can open all overhead bins 102 from wireless device 120a, or opening select overhead bins 102 in a controlled manner to enforce a certain deplaning order. The method can include, after boarding of passenger, manually closing the overhead bins 102 after passengers have been seated. In embodiments, the method can include closing the overhead bins by wirelessly commanding a respective door actuator 112 in each overhead bin 102 to close after passengers have been seated.

In certain embodiments, the wireless device 120 can be a flight crew wireless device 120a and the method can further include opening an individual bin without opening other overhead bins upon receiving a command 118 from a wireless passenger device 120b. In embodiments, the method can include preventing opening of the overhead bins 102 in certain phases of a flight. In embodiments, the method can include opening an individual overhead bin 102 without opening any other overhead bins upon receiving a command from the wireless device 120, for example to allow for individual control of respective overhead bins with the wireless device 120.

In embodiments, the wireless device 120 can include a graphical user interface (GUI) 130 and a location sensor 132, and the method can further include detecting location of the wireless device 120, displaying indicators of nearby overhead bins on the GUI 130, receiving user input indicative of which overhead bin 102 to open of the nearby overhead bins, and opening only one or more overhead bins 102 indicated by the user input without opening any other overhead bins.

In embodiments, opening can include unlatching a door 104 of each overhead bin, and allowing each door to open under bias constantly applied to the door 104. opening includes driving each door 104 open with a respective actuator 112. The method can include closing each door 104 with the respective actuator 112. The methods and systems of the present disclosure, as described above and shown in the drawings, provide for touch free operation of overhead bins.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

While the apparatus and methods of the subject disclosure have been shown and described, those skilled in the art will readily appreciate that changes and/or modifications may be made thereto without departing from the scope of the invention as defined by the claims.

## Claims

1. A system comprising:
an overhead bin (102) including a door (104) configured to open and close an opening (106) of the overhead bin for access to and securing of an interior space (108) of the overhead bin;
a latch mechanism (110) operatively connecting the opening of the overhead bin to the door of the overhead bin to secure the door to the opening in a closed position, and to release the door from the opening for access to the interior space; and
a controller (114) operatively connected to the latch mechanism, wherein the controller includes a wireless receiver (116) and machine readable instructions configured to cause the controller to:
release the latch mechanism for releasing the door from the opening upon receipt of a wireless command to open the overhead bin.

2. The system as recited in claim 1, wherein the overhead bin is one of a plurality of similar overhead bins, each having a respective door, opening, latch mechanism, and controller, and further comprising:
a wireless device (120) configured to issue a command (118) to each of the controllers to open all of the overhead bins.

3. The system as recited in claim 2, further comprising a server (122) wirelessly connecting between the wireless device and the wireless receivers of the controllers for controlling the overhead bins from the wireless device.

4. The system as recited in claim 3, wherein the wireless device is a flight crew device (120a) and wherein the server is configured to connect a plurality of wireless passenger devices (120b), wherein the wireless passenger devices, the server, and the controllers are configured for the server to accept commands from each wireless passenger device to open only one or more overhead bins for which a given passenger device is authorized.

5. The system as recited in claim 3, wherein the server and the overhead bins are located in an aircraft interior, and wherein each controller and latch mechanism is electrically connected to aircraft power.

6. The system as recited in any of claims 2 to 5, wherein at least one of the wireless device, the overhead bins, and/or the server include machine readable instructions configured to prevent opening of the overhead bins in certain phases of a flight; and/or
wherein the wireless device, the server, and controllers are configured to allow for individual control of opening of each overhead bin so that a user of the wireless device can selectively open one or more individual overhead bins or all overhead bins.

7. The system as recited in any of claims 2 to 6, wherein the wireless device includes:
a graphical user interface, GUI;
a location sensor (132); and
machine readable instructions configured to cause the wireless device to detect location of the wireless device, display indicators of nearby overhead bins on the GUI, and receive user input indicative of which overhead bin to open of the nearby overhead bins.

8. The system as recited in any preceding claim, wherein the door is biased to open relative to the opening upon release of the latch mechanism.

9. The system as recited in any preceding claim, wherein the latch mechanism includes an actuator (112) connecting between the door and the opening to actively drive the door closed and open based on command signals from the controller.

10. A method comprising:
after landing an aircraft, wirelessly opening a plurality of overhead bins upon receiving a command from a wireless device.

11. The method as recited in claim 10, further comprising: manually closing the overhead bins after passengers have been seated, and/or further comprising closing the overhead bins by wirelessly commanding a respective door actuator in each overhead bin to close after passengers have been seated.

12. The method as recited in claim 10 or 11, wherein the wireless device is a flight crew wireless device and further comprising:
opening an individual bin without opening other overhead bins upon receiving a command from a wireless passenger device; and optionally further comprising preventing opening of the overhead bins in certain phases of a flight.

13. The method as recited in claim 10, 11 or 12, further comprising opening an individual overhead bin without opening any other overhead bins upon receiving a command from the wireless device.

14. The method as recited in any of claims 10 to 13, wherein the wireless device includes a graphical user interface, GUI, and a location sensor, and further comprising:
detecting location of the wireless device;
displaying indicators of nearby overhead bins on the GUI;
receiving user input indicative of which overhead bin to open of the nearby overhead bins; and
opening only one or more overhead bins indicated by the user input without opening any other overhead bins.

15. The method as recited in any of claims 10 to 14, wherein opening includes unlatching a door of each overhead bin, and allowing each door to open under bias constantly applied to the door, or
wherein opening includes driving each door open with a respective actuator, and optionally further comprising
closing each door with the respective actuator.
